# EUROPÄISCHE PATENTSCHRIFT

(11) **EP 2 684 442 B1**
(45) Veröffentlichungstag und Bekanntmachung des Hinweises auf die Patenterteilung: **28.09.2016**
(21) Anmeldenummer: 13003479.6
(22) Anmeldetag: 10.07.2013
(51) Int. Cl.: A01D 43/077, A01D 69/03, A01D 43/063

(54) **Mähfahrzeug**
Mowing vehicle
Véhicule de fauchage

(30) Priorität: 13.07.2012 DE 102012013983
(43) Veröffentlichungstag der Anmeldung: 15.01.2014
(73) Patentinhaber: Matev GmbH, 90579 Langenzenn (DE)
(72) Erfinder: Dürschinger, Wilhelm, DE - 90766 Fürth (DE); Dimmling, Ernst, DE - 90574 Roßtal (DE)
(74) Vertreter: Glück Kritzenberger Patentanwälte PartGmbB

(56) Entgegenhaltungen:
- EP-A1- 0 800 759
- US-A- 4 899 525
- US-A1- 2009 126 328
- US-B1- 7 665 285

## Beschreibung

Die Erfindung betrifft ein Mähfahrzeug, insbesondere Frontmähfahrzeug, mit einer von einem Fahrer gesteuerten Zugmaschine und mit einem Grasaufnahmesystem gemäß dem Oberbegriff des Anaspruchs 1. Ein derartiges Mähfahrzeug ist beispielsweise aus der US 7,665,285 B1 bekannt.

Derartige Mähfahrzeuge werden oftmals zum Mähen von großflächigen Grünanlagen, wie beispielsweise Park- oder Sportanlagen, eingesetzt. Ein solches Mähfahrzeug umfasst ein Grasaufnahmesystem mit fahrzeugrückseitigem Schnittgut-Auffangbehälter und kann eine verbrennungsmotorisch angetriebene Zugmaschine mit frontseitigem Führerhaus sowie rückseitigem Antriebsverbrennungsmotor aufweisen.

Bei dem aus der eingangs genannten US 7,665,285 B1 bekannten Mähfahrzeug weist das Grasaufnahmesystem ein Schneidwerk auf, welches frontseitig am Grasaufnahmesystem angekoppelt ist. Das Schneidwerk, das ein oder mehrere Mähbalken oder Schneidmesser aufweisen kann, umfasst ein Getriebewerk, über welches das Schneidwerkzeug mit dem Antriebsmotor der Zugmaschine gekoppelt und betreibbar ist.

Bei dem bekannten Mähfahrzeug ist der anhebbare und kippbare Schnittgut-Auffangbehälter von der Zugmaschine hinter dem Fahrersitz praktisch getragen (Auflieger-Variante), wobei je nach Ausführung des Grasaufnahmesystems der Schnittgut-Auffangbehälter auch als Anhänger mit beispielsweise einer Radachse mit zwei Rädern von der Zugmaschine gezogen werden. Dem Schnittgut-Auffangbehälter des bekannten Mähfahrzeugs ist eine Turbine zugeordnet, von der ein flexibler Kanal in Form eines Rohres oder dergleichen zum Schneidwerk führt. Mittels der Turbine wird das Schnittgut vom Schneidwerk abgesaugt und in den Schnittgut-Auffangbehälter gefördert.

Der Schnittgut-Auffangbehälter ist typischerweise hydraulisch verstellbar zum Zwecke des Ausschüttens des Schnittguts in ein bereitgestelltes Transportfahr zeug. Bei bestimmten Ausführungen kann der Schnittgut-Auffangbehälter über eine Ladekante eines bereitgestellten Fahrzeugs hinaus angehoben werden, um das Schnittgut aus dem Schnittgut-Auffangbehälter auskippen zu können.

Die Turbine wird herkömmlicherweise ebenso hydraulisch betrieben. Hierzu wird Hydrauliköl mittels einer Pumpe als Ölfördervorrichtung in einem Ölkreislauf geführt, in dem ein Öltank angeordnet ist. Der Öltank ist häufig zum Zwecke des Gewichtsausgleichs auf der der Turbine gegenüberliegenden Seite des Schnittgut-Auffangbehälters - und somit hinter dem Führerhaus - angeordnet. Im Zuge der Kreislaufführung des Hydrauliköls mittels der Ölfördervorrichtung erhitzt sich das Öl während des Betriebs, wodurch die entstehende Wärmeentwicklung sich auch auf das Führerhaus auswirken kann, sodass der Benutzerkomfort nachteilig beeinflusst wird. Typischerweise ist die Ölfördervorrichtung nahe dem Öltank angeordnet, sodass es einerseits zu einer Überhitzung der Ölfördereinrichtung kommen kann und andererseits eine zusätzliche Lärm- und Wärmebelästigung für den Fahrzeugführer entsteht.

Der Erfindung liegt daher die Aufgabe zugrunde, ein Mähfahrzeug der eingangs genannten Art anzugeben, welches unter Vermeidung der genannten Nachteile eine konstruktiv einfache und kostengünstige Ölfördervorrichtung umfasst.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu ist vorgesehen, dass bei einem Mähfahrzeug, insbesondere Frontmähfahrzeug, mit einer Zugmaschine und mit einem Grasaufnahmesystem der Antriebsmotor der Zugmaschine über eine Antriebswelle mit einer ersten Getriebewelle eines Getriebewerk koppelbar ist, das eine zweite Getriebewelle zum Antrieb des fahrzeugfrontseitig angeordneten Schneidwerks aufweist. Dem fahrzeugrückseitig angeordneten, anhebbaren und kippbaren Schnittgut-Auffangbehälter ist eine Turbine zum Absaugen des Schnittguts vom Schneidwerk sowie zur Förderung des Schnittguts in den Schnittgut-Auffangbehälter zugeordnet.

Zum Antreiben der Turbine ist eine hydraulische Ölfördervorrichtung in einem einen Öltank umfassenden Ölkreislauf vorgesehen. Die Ölfördervorrichtung ist mit dem Getriebewerk gekoppelt und antriebstechnisch mit der Zugmaschine, d. h. mit deren Antriebsmotor betrieben. Durch die gemeinsame Kopplung des Schneidwerks und der Ölfördervorrichtung mit dem Getriebewerk sind beide Geräte im Wesentlichen gleichzeitig und gemeinsam mittels der Zugmaschine bzw. deren Antriebsmotor betreibbar. Dadurch entfällt ein zusätzlicher separater Antrieb für die Ölfördervorrichtung beziehungsweise eine separate Kopplung der Ölfördervorrichtung an den Antriebsmotor. Dadurch sind insbesondere die Lärm- und/oder Wärmeentwicklung während eines Betriebs des Mähfahrzeugs reduziert und somit der Benutzerkomfort erhöht.

Das Getriebewerk weist ein im Wesentlichen würfelartiges Getriebegehäuse auf, aus dem die mit dem Antrieb koppelbare Getriebewelle und die mit dem Schneidwerk gekoppelte Getriebewelle sowie die mit der Ölfördervorrichtung koppelbare Getriebewelle zumindest teilweise herausragen.

In einer vorteilhaften Ausgestaltungsform ragen die drei Getriebewellen im Wesentlichen T-förmig und gegeneinander um 90° versetzt aus dem Getriebegehäuse heraus. Die Antriebswelle des Antriebsmotors ist bevorzugt an die vordere Stirnseite des Mähfahrzeugs geführt und ragt dort als Wellenzapfen nach Art einer Zapfwellenkupplung heraus. Die schneidwerkseitige Getriebewelle verläuft etwa vertikal entlang des kurzen T-Schenkels und ragt untergrundseitig aus dem Getriebegehäuse heraus. Die antriebsseitige Getriebewelle verläuft etwa horizontal entlang des langen T-Schenkels und ragt fahrzeugseitig aus dem würfelartigen Getriebegehäuse heraus. Der dadurch gebildete Wellenzapfen und der vom Antriebsmotor angetriebene frontseitige Wellenzapfen werden vorzugsweise über eine Gelenkwelle miteinander gekoppelt. Über diese Gelenkwelle ist das Schneidwerk mittels des Antriebsmotors antreibbar. Die mit der Ölfördervorrichtung koppelbare (pumpenseitige) Getriebewelle ragt, vorzugsweise entlang des kurzen T-Schenkels vertikal, aus der dem Untergrund abgewandten Seitenfläche des Getriebegehäuses heraus.

Die Ölfördervorrichtung, die nach Art einer Hubkolben-Hydraulikpumpe ausgeführt sein kann, ist über eine Kupplung mit der pumpenseitigen Getriebewelle gekoppelt. In einer besonders bevorzugten Ausgestaltung ist die Ölfördervorrichtung im Wesentlichen vertikal oberhalb des Getriebewerkes angeordnet. Dadurch ist eine gemeinsame sowie konstruktiv besonders einfache und raumsparende Kopplung von Ölfördervorrichtung und Schneidwerk mit der Zugmaschine bzw. deren Antriebsmotor realisiert.

Das Mähfahrzeug ist auch ohne Grasaufnahmesystem sowie beispielsweise mit und ohne Turbine beziehungsweise Schnittgut-Auffangbehälter betreibbar. Insbesondere ist durch die Auskupplung der Getriebewellen ein schnelles und einfaches Austauschen des Schneidwerks und Bestücken mit einer Schneeräumvorrichtung, rotierenden Besenelementen oder einer Laubsaugervorrichtung ermöglicht. Dadurch wird die Funktionalität des Fahrzeugs vorteilhaft erhöht, sodass das dieses auch als Kehr- oder Schneeräumfahrzeug einsetzbar ist. Weiterhin wird durch die Auskupplungsmöglichkeiten die Wartung und Reparatur des Mähfahrzeugs vorteilhaft erleichtert.

In einer vorteilhaften Ausgestaltung ist der Öltank vorderseitig im Bereich des Schneidwerks angeordnet. In einer geeigneten Ausgestaltungsform ist eine entsprechende Vorrichtung vorgesehen, die das Schneidwerk und das Getriebewerk trägt sowie ein mit dem Mähfahrzeug gekoppeltes Gestell aufweist, wobei die Vorrichtung genügend Bauraum für die Montage des Öltanks bereitstellt. Dadurch ist der Öltank unter anderem zur Kühlung des Öls durch Konvektion mit der Umgebungsluft eingerichtet, wodurch einerseits die Lebensdauer der mit dem Hydrauliköl angetriebenen Geräte erhöht und andererseits die Wärmebelastung für den Fahrzeugführer vorteilhaft reduziert wird.

In einer ebenso vorteilhaften Ausgestaltung ist ein Kühlsystem zur Kühlung des im Mähbetrieb durch den Ölkreislauf fließenden Hydrauliköls vorgesehen. Das Kühlsystem ist beispielsweise als ein separater Kühler des Öltanks ausgeführt, sodass sichergestellt ist, dass eine besonders effektive Wärmeabfuhr des Ölkreislaufs erfolgt.

In einer bevorzugten Weiterbildung weist der Schnittgut-Auffangbehälter des Grasaufnahmesystems einen ersten Behälterbereich und einen zweiten Behälterbereich auf, wobei der erste Behälterbereich zumindest teilweise auf der Zugmaschine rückseitig aufliegt, und wobei der zweite Behälterbereich des Schnittgut-Auffangbehälters hinter dem Mähfahrzeug gegen den Boden fortgeführt ist. Der Schnittgut-Auffangbehälter ist somit im Wesentlichen eine Kombination aus der eingangs genannten, gezogenen Anhängervariante und der Auflage- oder Auflieger-Variante.

Herkömmlicherweise ist der Öltank zum Zwecke des Gewichtsausgleichs auf der der Turbine gegenüber liegenden Seite des Auffangbehälters angeordnet. Durch die vorderseitige Auslagerung des Öltanks zur besseren Kühlung wird durch den zweiten Behälterbereich und dessen Fortführung gegen den Boden ein besonders einfacher und betriebssicherer Schnittgut-Auffangbehälter realisiert, welcher insbesondere einem Umkippen des Mähfahrzeugs entgegenwirkt. Durch die kombinierte Ausführung wird weiterhin die Gewichtsbelastung auf eine Hinterachse der Zugmaschine im Vergleich zu einer reinen Auflieger-Variante vorteilhaft reduziert. Hierzu ist es in einer möglichen Weiterbildungsform denkbar, die Hinterachse mittels eines Gewichtverteilungssystems weiter zu entlasten, sodass sichergestellt wird, dass diese nicht überbelastet wird.

In einer geeigneten Weiterbildung weist der zweite Behälterbereich des Schnittgut-Auffangbehälters eine sich vorzugsweise über die gesamte Behälterbereite erstreckende Radachse mit einer Anzahl von Rädern, vorzugsweise zwei seitlich angeordneten Rädern, zur Abstützung gegen den Untergrund auf. Die Räder sind insbesondere nach Art von antriebslosen Stützrädem oder Lenkrollen ausgeführt. In dieser Weiterbildungsform liegt das Gewicht des Schnittgut-Auffangbehälters zumindest teilweise auf den Rädern auf, sodass beispielsweise mögliche Probleme mit dem Bremssystem der Zugmaschine vorteilhaft vermieden werden. Durch das Abstützen des Schnittgut-Auffangbehälters gegen den Untergrund verbessert sich weiterhin der Sicherheitsaspekt beim hydraulischen Verstellen zum Zwecke eines Ausschüttens des Schnittguts, insbesondere bei einem Ausschütten über eine hohe Ladekante eines bereitgestellten Transportfahrzeugs.

In einer bevorzugten Ausgestaltung erstreckt sich der Schnittgut-Auffangbehälter im Wesentlichen über die gesamte Breite und/oder Höhe des Mähfahrzeugs. Durch die Einschränkung der Schnittgut-Auffangbehälterbreite ist sichergestellt, dass es dem Fahrzeugführer ermöglicht ist, mittels fahrzeugfesten Seitenspiegeln den gesamten hinteren Bereich des Mähfahrzeugs einzusehen, sodass Kollisionen mit Gegenständen (Bäume, Bänke oder dergleichen) vorteilhafterweise vermeidbar sind.

Durch die Einschränkung der Behälterhöhe des Schnittgut-Auffangbehälters ist sichergestellt, dass selbst bei einem vollständig beladenen Schnittgut-Auffangbehälter der Fahrzeugschwerpunkt tief genug liegt, um ein Umkippen des Fahrzeugs zu vermeiden. Dadurch ist das Mähfahrzeug problemlos und betriebssicher auch im Bereich von Hanglagen einsetzbar.

Die erfindungsgemäße Kombination aus gezogener Anhängervariante und der Auflieger-Variante ermöglicht somit eine Optimierung zwischen Länge, Breite und Höhe des Schnittgut-Auffangbehälters bei gleichzeitig vergleichsweise großen Auffangvolumen, vorzugsweise bis zu 1300 Litern. Mit dem kombiniert getragenen und gezogenen Schnittgut-Auffangbehälter kann somit bei verbesserter Lagestabilität des Mähfahrzeugs dieses grundsätzlich auch insgesamt vorteilhafterweise schmaler gebaut werden.

Nachfolgend werden Ausführungsbeispiele der Erfindung anhand einer Zeichnung näher erläutert. Darin zeigen:
- Fig. 1: in Seitenansicht ein Mähfahrzeug mit einem Grasaufnahmesystem und mit einem Getriebewerk sowie mit einem hydraulischen Ölkreislauf mit einer Ölpumpe, und
- Fig. 2: in Rückansicht das Mähfahrzeug mit einem Schnittgut-Auffangbehälter und einer diesen abstützenden Radachse mit zwei Stützrädern.

Einander entsprechende Teile und Größen sind in alten Figuren mit den gleichen Bezugszeichen versehen.

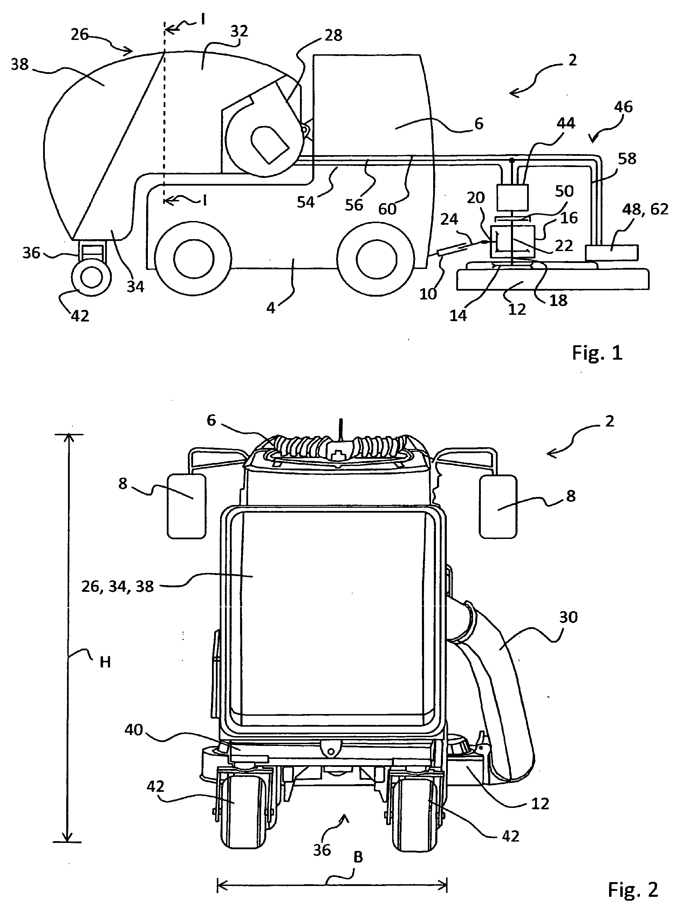

Fig. 1 zeigt ein selbstfahrendes, von einem Fahrzeugführer gesteuertes Frontmähfahrzeug 2 mit einem Grasaufnahmesystem für großflächige Grünanlagen, wie beispielsweise Parkanlagen oder Sportplätze. Das Mähfahrzeug 2 umfasst im Wesentlichen eine verbrennungsmotorisch angetriebene Zugmaschine 4 mit einem vorderseitigen Führerhaus 6 und mit einem nicht näher dargestellten rückseitig angeordneten Antriebs-verbrennungsmotor. Das Führerhaus 6 umfasst - wie in Fig. 2 ersichtlich - zwei seitlich angeordnete Seitenspiegel 8 mit denen der Fahrzeugführer im Wesentlichen den gesamten hinteren Bereich des Mähfahrzeugs 2 einsehen kann, um Kollisionen mit Gegenständen (Bäume, Bänke oder dergleichen) zu vermeiden. Von dem Antriebsverbrennungsmotor ist eine Kurbelwelle 10 an die vordere Stirnseite des Mähfahrzeugs 2 geführt und ragt dort als Wellenzapfen nach Art einer Zapfwellenkupplung hervor.

Ein Schneidwerk 12 ist frontseitig am Mähfahrzeug 2 angekoppelt. Das Schneidwerk 12 umfasst ein nicht näher dargestelltes Schneidwerkzeug, vorzugsweise ein oder mehrere Schneidmesser oder Mähbalken. Das Schneidwerk 12 weist eine Antriebsscheibe 14 mit Mähwerksriementrieb auf, die an ein würfelförmiges Getriebewerk 16 mittels einer ersten schneidwerkseitigen Getriebewelle 18 gekoppelt ist. Die schneidwerkseitige Getriebewelle 18 ist aus dem würfelförmigen Gehäuse des Getriebewerks 16 herausgeführt und über die Antriebsscheibe 14 mit dem Schneidwerkzeug zu deren Antrieb gekoppelt.

Aus dem Getriebewerk 16 ragen im Wesentlichen die schneidwerkseitige Getriebewelle 18, eine antriebsseitige (dritte) Getriebewelle 20 und eine pumpenseitige (zweite) Getriebewelle 22 heraus. Dabei sind die Getriebewellen 18, 20 und 22 derart angeordnet, dass diese um das würfelartigen Gehäuse des Getriebewerks 16 etwa um 90° verkippt T-förmig angeordnet sind.

Die schneidwerkseitige (erste) Getriebewelle 18 verläuft etwa vertikal entlang des kurzen T-Schenkels und ragt untergrundseitig aus dem Getriebegehäuse zur Kopplung an die Antriebsscheibe 14 heraus. Die antriebsseitige (dritte) Getriebewelle 20 verläuft etwa horizontal entlang des langen T-Schenkels und ragt fahrzeugseitig aus dem Getriebewerk 16 heraus. Der dadurch gebildete Wellenzapfen und die vom Antriebsverbrennungsmotor angetriebene frontseitige Kurbelwelle 10 werden vorzugsweise über eine Gelenkwelle 24 miteinander gekoppelt. Über die Gelenkwelle 24 ist das Schneidwerk 12 mittels des Antriebsverbrennungsmotors der Zugmaschine 4 antreibbar. Die pumpenseitige (zweite) Getriebewelle 22 ragt entlang des kurzen T-Schenkels vertikal aus der dem Untergrund abgewandten Seitenfläche des Getriebewerks 16 heraus.

Das Grasaufnahmesystem des Mähfahrzeugs 2 weist einen Schnittgut-Auffangbehälter 26 auf, dem eine Turbine 28 zugeordnet ist. Von dieser führt ein flexibler Kanal 30 in Form eines Rohres zum Schneidwerk 12. Mittels der Turbine 28 wird das geschnittene Schnittgut vom Schneidwerk 12 abgesaugt und über den Kanal 30 in den Schnittgut-Auffangbehälter 26 gefördert.

Der Schnittgut-Auffangbehälter 26 ist hydraulisch verstellbar, um dessen einfaches Entleeren durch Ausschüttens des Schnittguts in ein bereitgestelltes Transportfahrzeug zu ermöglichen. Hierzu ist der Schnittgut-Auffangbehälter 26 hydraulisch vertikal anhebbar und kippbar, um den Schnittgut-Auffangbehälter 26 über die Ladekante eines bereitgestellten Fahrzeugs hinaus anzuheben und das Schnittgut aus dem Schnittgut-Auffangbehälter 26 auskippen zu können.

Der Schnittgut-Auffangbehälter 26 ist insbesondere als eine Kombination einer gezogener Anhängervariante und einer Aufleger-Variante ausgeführt. Der Schnittgut-Auffangbehälter 26 weist hierzu einen ersten Behälterbereich 32 und einen zweiten Behälterbereich 34 auf, wobei der erste Behälterbereich 32 zumindest teilweise auf der Zugmaschine 4 rückseitig aufliegt. Der zweite Behälterbereich 34 ist hinter dem Grasaufnahmesystem 2 gegen den Boden mit einem Stützwerk 36 fortgeführt.

In Fig. 1 ist die Unterteilung des Schnittgut-Auffangbehälters 26 in die Behälterbereiche 32 und 34 anhand einer gestrichelten Linie I-I dargestellt. Der hintere Behälterbereich 34 weist eine Klappe 38 auf, die zum einfachen Ausschütten des Schnittguts aus dem im Wesentlichen geschlossenen Schnittgut-Auffangbehälters 26 in eine Offenposition verstellbar ist.

Der fahrzeugseitige Behälterbereich 34 des Schnittgut-Auffangbehälters 26 schmiegt sich im Wesentlichen an die Kontur des Mähfahrzeugs 2 an. Das Stützwerk 36 umfasst eine sich über die gesamte Behälterbereite B erstreckende Radachse 40 mit zwei seitlich angeordneten Stützrädem 42.

Die Turbine 28 ist hydraulisch betrieben. Hierzu wird Hydrauliköl mittels einer Pumpe 44 in einem Ölkreislauf 46 geführt, indem ein Öltank 48 angeordnet ist. Die Pumpe 44 ist insbesondere eine Hubkolben-Hydraulikpumpe, die über eine Kupplung 50 mit der pumpenseitigen (zweiten) Getriebewelle 22 gekoppelt ist. Die Pumpe 44 ist hierzu im Wesentlichen vertikal oberhalb des Getriebewerkes 16 angeordnet, wobei die Hubbewegung des Hubkolbens etwa vertikal zum Getriebewerk 16 in Richtung des kurzen T-Schenkels erfolgt. Dadurch ist die Pumpe 44 gemeinsam mit dem Schneidwerk 12 durch die Zugmaschine 4, d. h. deren Antriebsmotor betreibbar. Die Kupplung 50 dient zur Auskupplung der Pumpe 44 von der Getriebewelle 22 und somit vom Getriebewerk 16. Dadurch wird eine Wartung und/oder Reparatur der Pumpe 44 vorteilhaft erleichtert.

Der Ölkreislauf 46 umfasst im Wesentlichen eine Hydraulikleitung 54 als Vorlauf zu einem nicht näher dargestellten Hydraulikmotor der Turbine 28, eine Leckölleitung 56 zwischen dem Hydraulikmotor, der Pumpe 44 und dem Öltank 48, eine Saugleitung 58 zwischen der Pumpe 44 und dem Öltank 48, sowie eine Rücklaufleitung 60 zwischen dem Hydraulikmotor und dem Öltank 48.

Der Öltank 48 ist vorne, d. h. an der Frontseite des Fahrzeugs 2 im Bereich des Schneidwerkes 12 angeordnet. Der Öltank 48 dient unter anderem zur Kühlung des Hydrauliköls während des Betriebs durch Konvektion, wobei hierzu zusätzlich oder alternativ ein separater Kühler 62 vorgesehen ist.

In einer geeigneten Dimensionierung ragt der Schnittgut-Auffangbehälter 26 in seiner Behälterbreite B nicht über die Breite des Mähfahrzeugs 2 hinaus. Dadurch ist sichergestellt, dass der Fahrzeugführer über die Seitenspiegel 8 den gesamten hinteren Bereich des Mähfahrzeugs 2 einsehen kann. Die Höhe H des Mähfahrzeugs 2 und insbesondere des Schnittgut-Auffangbehälters 26 sind derart gewählt, dass auch bei einem vollständig beladenen Schnittgut-Auffangbehälter 26 der Schwerpunkt des Mähfahrzeugs 2 tief genug liegt, sodass sichergestellt ist, dass das Mähfahrzeug 2 auch im Bereich von Hanglagen nicht umkippt.

In einer bevorzugten Dimensionierung sind die Länge, Breite und Höhe des Schnittgut-Auffangbehälters 26 derart gewählt, dass ein vergleichsweise großes Auffangvolumen von etwa 1.300 Litern realisiert ist. Das Mähfahrzeug 2 weist im Bereich des Schneidwerkes 12 die größte Breitenausdehnung von etwa 1,7 Metern auf.

Die Erfindung ist nicht auf die vorstehend beschriebenen Ausführungsbeispiele beschränkt.

**Bezugszeichenliste**

| | | | |
|---|---|---|---|
| 2 | Mähfahrzeug | 34 | Behälterbereich |
| 4 | Zugmaschine | 36 | Stützwerk |
| 6 | Führerhaus | 38 | Klappe |
| 8 | Seitenspiegel | 40 | Radachse |
| 10 | Kurbelwelle | 42 | Stützrad |
| 12 | Schneidwerk | 44 | Pumpe |
| 14 | Antriebsscheibe | 46 | Ölkreislauf |
| 16 | Getriebewerk | 48 | Öltank |
| 18 | Getriebewelle | 50 | Kupplung |
| 20 | Getriebewelle | 54 | Hydraulikleitung |
| 22 | Getriebewelle | 56 | Leckölleitung |
| 24 | Gelenkwelle | 58 | Saugleitung |
| 26 | Schnittgut-Auffangbehälter | 60 | Rücklaufleitung |
| 28 | Turbine | 62 | Kühler |
| 30 | Kanal | B | Behälterbreite |
| 32 | Behälterbereich | H | Fahrzeughöhe |

## Patentansprüche

1. Mähfahrzeug (2), insbesondere Frontmähfahrzeug, mit einer verbrennungsmotorisch angetriebenen Zugmaschine (4) und mit einem Grasaufnahmesystem sowie mit einem über eine Antriebswelle (10) mit der Zugmaschine (4) koppelbaren Getriebewerk (16), das eine erste Getriebewelle (18) zum Antrieb eines fahrzeugfrontseitig angeordneten Schneidwerks (12) aufweist, wobei das Grasaufnahmesystem einen fahrzeugrückseitig angeordneten, anhebbaren und kippbaren Schnittgut-Auffangbehälter (26) und eine Turbine (28) zum Absaugen des Schnittguts vom Schneidwerk (12) sowie zur Förderung des Schnittguts in den Schnittgut-Auffangbehälter (26) aufweist, wobei zum Antreiben der Turbine (28) eine hydraulische Ölfördervorrichtung (44) in einem einen Öltank (48) umfassenden Ölkreislauf (46) vorgesehen ist, und wobei die Ölfördervorrichtung (44) über eine zweite Getriebewelle (22) mit dem mittels der Zugmaschine (4) angetriebenen Getriebewerk (16) gekoppelt ist,
**dadurch gekennzeichnet,**
**dass** das Getriebewerk (16) ein im Wesentlichen würfelartiges Getriebegehäuse aufweist, aus dem die zum Antrieb des Schneidwerks (12) dienende erste Getriebewelle (18) untergrundseitig und die zum Antrieb der Ölfördervorrichtung (44) dienende zweite Getriebewelle (22) aus der dem Untergrund abgewandten Seitenfläche des Getriebewerks (16) herausragt.

2. Mähfahrzeug (2) nach Anspruch 1,
**dadurch gekennzeichnet,**
**dass** aus dem Getriebegehäuse eine mit der Antriebswelle (10) koppelbare dritte Getriebewelle (20) zumindest teilweise herausragt.

3. Mähfahrzeug (2) nach Anspruch 1 oder 2,
**dadurch gekennzeichnet,**
**dass** die Ölfördervorrichtung (44) mittels einer Kupplung (50) mit der zweiten Getriebewelle (22) gekoppelt ist.

4. Mähfahrzeug (2) nach einem der Ansprüche 1 bis 3,
**dadurch gekennzeichnet,**
**dass** die Ölfördervorrichtung (44) im Wesentlichen vertikal oberhalb des Getriebewerkes (16) angeordnet ist.

5. Mähfahrzeug (2) nach einem der Ansprüche 1 bis 4,
**dadurch gekennzeichnet,**
**dass** der Öltank (48) vorderseitig im Bereich des Schneidwerks (12) angeordnet ist.

6. Mähfahrzeug (2) nach einem der Ansprüche 1 bis 5,
**gekennzeichnet durch** ein Kühlsystem (62) zur Kühlung des im Mähbetrieb **durch** den Ölkreislauf (46) fließenden Hydrauliköls.

7. Mähfahrzeug (2) nach einem der Ansprüche 1 bis 6,
**dadurch gekennzeichnet,**
**dass** der Schnittgut-Auffangbehälter (26) einen ersten Behälterbereich (32) und einen zweiten Behälterbereich (34) aufweist, wobei der erste Behälterbereich (32) zumindest teilweise auf der Zugmaschine (4) aufliegt, und wobei der zweite Behälterbereich (34) fahrzeugrückseitig gegen den Untergrund fortgeführt ist.

8. Mähfahrzeug (2) nach Anspruch 7,
**dadurch gekennzeichnet,**
**dass** der zweite Behälterbereich (34) eine Radachse (40) mit einer Anzahl von Rädern (42), vorzugsweise zwei seitlich angeordneten Rädern (42), zur Abstützung gegen den Untergrund aufweist.

9. Mähfahrzeug (2) nach einem der Ansprüche 1 bis 8,
**dadurch gekennzeichnet,**
**dass** sich der Schnittgut-Auffangbehälter (26) im Wesentlichen über die gesamte Breite und/oder Höhe des Mähfahrzeugs (2) erstreckt.

## Claims

1. Mowing vehicle (2), in particular a front mowing vehicle, having a tractor unit (4) driven by a combustion engine and having a grass collection system and having a gear mechanism (16) which is able to be coupled to the tractor unit (4) via a drive shaft (10), said gear mechanism having a first gear shaft (18) for driving a cutting mechanism (12) arranged on the vehicle front side, wherein the grass collection system has a cuttings collection container (26) which is arranged on the vehicle rear side, is able to be lifted and is able to be tilted, and a turbine (28) for vacuuming the cuttings from the cutting mechanism (12) and transporting the cuttings into the cuttings collection container (26), wherein a hydraulic oil supply device (44) is provided in an oil circuit (46) comprising an oil tank (48) for driving the turbine (28), and wherein the oil supply device (44) is coupled to the gear mechanism (16) driven by means of the tractor unit (4) via a second gear shaft (22),
**characterised in that**
the gear mechanism (16) has a substantially cube-shaped gear housing, from which the first gear shaft (18) serving to drive the cutting mechanism (12) protrudes on the ground side and the second gear shaft (22) serving to drive the oil supply device (44) protrudes from the side surface of the gear mechanism (16) facing away from the ground.

2. Mowing vehicle (2) according to claim 1,
**characterised in that** a third gear shaft (20) which is able to be coupled to the drive shaft (10) at least partially protrudes from the gear housing.

3. Mowing vehicle (2) according to claim 1 or 2,
**characterised in that** the oil supply device (44) is coupled to the second gear shaft (22) by means of a coupling (50).

4. Mowing vehicle (2) according to one of claims 1 to 3,
**characterised in that** the oil supply device (44) is arranged substantially vertically above the gear mechanism (16).

5. Mowing vehicle (2) according to one of claims 1 to 4,
**characterised in that** the oil tank (48) is arranged on the front side in the region of the cutting mechanism (12).

6. Mowing vehicle (2) according to one of claims 1 to 5,
**characterised by** a cooling system (62) for cooling the hydraulic oil flowing through the oil circuit (46) during mowing operation.

7. Mowing vehicle (2) according to one of claims 1 to 6,
**characterised in that** the cuttings collection container (26) has a first container region (32) and a second container region (34), wherein the first container region (32) abuts at least partially on the tractor unit (4), and wherein the second container region (34) is continued against the ground on the rear side of the vehicle.

8. Mowing vehicle (2) according to claim 7,
**characterised in that** the second container region (34) has a wheel axis (40) having a number of wheels (42), preferably two laterally arranged wheels (42), for support against the ground.

9. Mowing vehicle (2) according to one of claims 1 to 8,
**characterised in that** the cuttings collection container (26) extends substantially over the whole width and/or height of the mowing vehicle (2).

## Revendications

1. Véhicule de fauchage ou de tonte (2), notamment véhicule de fauchage frontal avant, comprenant un tracteur (4) entrainé par moteur thermique et un système de ramassage d'herbe, ainsi qu'une boite de transmission (16), qui peut être couplée au tracteur (4) par l'intermédiaire d'un arbre d'entraînement (10), et qui comporte un premier arbre de transmission (18) pour entraîner une unité de coupe (12) agencée frontalement à l'avant du véhicule, véhicule
dans lequel le système de ramassage d'herbe comprend un bac ou réservoir de collecte de produit coupé (26), qui est agencé sur le côté arrière du véhicule et peut être soulevé et basculé, et une turbine (28) prévue pour aspirer le produit coupé de l'unité de coupe (12) ainsi que pour transporter le produit coupé dans le bac de collecte de produit coupé (26),
dans lequel pour entraîner la turbine (28), il est prévu un dispositif de refoulement d'huile hydraulique (44) dans un circuit d'huile (46) comprenant un réservoir d'huile (48),
et dans lequel le dispositif de refoulement d'huile (44) est couplé, par l'intermédiaire d'un deuxième arbre de transmission (22), à la boite de transmission (16) entraînée par le tracteur (4),
**caractérisé**
**en ce que** la boite de transmission (16) comprend un carter de boite de transmission sensiblement en forme de dé, duquel fait saillie, sur le côté dirigé vers le sol, le premier arbre de transmission (18) servant à l'entraînement de l'unité de coupe (12), et le deuxième arbre de transmission (22) servant à l'entraînement du dispositif de refoulement d'huile (44) fait saillie de la surface latérale de la boite de transmission (16), située à l'opposé du côté dirigé vers le sol.

2. Véhicule de fauchage ou de tonte (2) selon la revendication 1,
**caractérisé**
**en ce qu'**un troisième arbre de transmission (20) pouvant être couplé à l'arbre d'entraînement (10), fait saillie au moins partiellement hors du carter de boite de transmission.

3. Véhicule de fauchage ou de tonte (2) selon la revendication 1 ou la revendication 2,
**caractérisé**
**en ce que** le dispositif de refoulement d'huile (44) est couplé au moyen d'un accouplement ou embrayage (50), au deuxième arbre de transmission (22).

4. Véhicule de fauchage ou de tonte (2) selon l'une des revendications 1 à 3,
**caractérisé**
**en ce que** le dispositif de refoulement d'huile (44) est agencé sensiblement à la verticale au-dessus de la boite de transmission (16).

5. Véhicule de fauchage ou de tonte (2) selon l'une des revendications 1 à 4,
**caractérisé**
**en ce que** le réservoir d'huile (48) est agencé du côté avant, dans la zone de l'unité de coupe (12).

6. Véhicule de fauchage ou de tonte (2) selon l'une des revendications 1 à 5,
**caractérisé**
**par** un système de refroidissement (62) de l'huile hydraulique circulant à travers le circuit d'huile (46) au cours du fonctionnement en mode fauchage ou tonte.

7. Véhicule de fauchage ou de tonte (2) selon l'une des revendications 1 à 6,
**caractérisé**
**en ce que** le bac de collecte de produit coupé (26) présente une première zone de bac (32) et une deuxième zone de bac (34), la première zone de bac (32) reposant au moins en partie sur le tracteur (4), et la deuxième zone de bac (34) étant prolongée vers le sol, du côté arrière du véhicule.

8. Véhicule de fauchage ou de tonte (2) selon la revendication 7,
**caractérisé**
**en ce que** la deuxième zone bac (34) comprend un essieu de roue (40) avec un certain nombre de roues (42), de préférence deux roues (42) agencées latéralement, pour assurer l'appui au sol.

9. Véhicule de fauchage ou de tonte (2) selon l'une des revendications 1 à 8,
**caractérisé**
**en ce que** le bac de collecte de produit coupé (26) s'étend sensiblement sur toute la largeur et/ou hauteur du véhicule de fauchage ou de tonte (2).
